# FASCICULE DE BREVET EUROPEEN

(11) **EP 2 380 315 B1**
(45) Date de publication et mention de la délivrance du brevet: **17.10.2012**
(21) Numéro de dépôt: 09805774.8
(22) Date de dépôt: 21.12.2009
(51) Int. Cl.: H04L 12/40

(54) **PROCEDE ET DISPOSITIF DE CONTROLE DU REVEIL D'UN ORGANE D'UN RESEAU MULTIPLEXE, PAR COMPTAGE DE REVEILS INTEMPESTIFS**
VERFAHREN UND VORRICHTUNG ZUR STEUERUNG DES AUFWACHENS EINER EINRICHTUNG EINES MULTIPLEXIERTEN NETZWERKS DURCH ZÄHLEN VON UNBEABSICHTIGTEN AUFWECKUNGEN
METHOD AND DEVICE FOR CONTROLLING THE WAKE-UP OF A FACILITY OF A MULTIPLEXED NETWORK, BY COUNTING UNTIMELY WAKE-UPS

(30) Priorité: 16.01.2009 FR 0950277
(43) Date de publication de la demande: 26.10.2011
(73) Titulaire: Peugeot Citroën Automobiles SA, 78140 Vélizy-Villacoublay (FR)
(72) Inventeur: PEREZ ARZOZ, Nuria, 92140 Clamart (FR); BOISSERIE, Antony, F-91320 Wissous (FR)
(74) Mandataire: Vigand, Régis Louis Michel
(86) Numéro de dépôt international: PCT/FR2009/052651
(87) Numéro de publication internationale: WO 2010/081955

(56) Documents cités:
- WO-A-01/42054
- DE-A1- 10 358 584
- DE-B3- 10 246 337

## Description

L'invention concerne les réseaux de communication multiplexés comme par exemple ceux appelés réseaux d'interconnexion locale (ou LIN (pour « Local Interconnect Network »)) ou ceux de type CAN (« Controller Area Network »), lesquels sont notamment utilisés dans certains véhicules automobiles.

On entend ici par « réseau de communication multiplexé » un réseau de communication comprenant un bus auquel sont connectés un organe de gestion (appelé organe (ou noeud) maître dans le cas d'un réseau LIN) et au moins un organe (appelé organe (ou noeud) esclave dans le cas d'un réseau LIN). L'organe de gestion est notamment chargé de gérer les mises en veille et les réveils des organes de son réseau multiplexé.

Lorsque des organes (ou noeuds) d'un réseau multiplexé sont placés dans un état de veille (à la demande de l'organe de gestion), ils se réveillent automatiquement lorsqu'ils détectent une activité sur leur bus. Cette activité provient normalement d'un organe, éventuellement celui de gestion, qui requiert le réveil des autres organes.

On considère qu'il existe une activité sur un bus lorsque l'on peut détecter une transition dite « récessif-dominant » suivie d'un état dominant pendant une durée supérieure à un seuil (plusieurs dizaines de µs dans le cas d'un réseau CAN). L'état dominant (ou « logical low ») est le niveau électrique du réseau correspondant à un « 0 » logique. Inversement, l'état récessif (ou « logical high ») est le niveau électrique du réseau correspondant à un « 1 » logique. Le niveau logique « 0 » est appelé niveau dominant car il est prioritaire lorsque plusieurs organes veulent imposer des niveaux différents. Par conséquent, tout phénomène volontaire ou involontaire (parasites) entraînant une transition récessif-dominant suivie d'un état dominant pendant une durée supérieure à un seuil est considéré par un organe comme une activité devant entraîner son réveil.

Lorsque l'organe de gestion détecte une activité sur un bus, il doit immédiatement déterminer si un organe de son réseau est effectivement à l'origine de cette activité et si elle est justifiée. Si l'organe de gestion obtient d'un organe activateur une confirmation de réveil et qu'il considère que le réveil du réseau est justifié, alors il autorise les organes à rester réveillés. Dans le cas contraire (absence de confirmation ou bien réveil du réseau injustifié), l'organe de gestion ordonne aux organes qu'il gère de se remettre dans leur état de veille.

Lorsqu'un organe (capable de générer des demandes de réveil de réseau) est défectueux ou qu'il n'accepte pas le rejet par l'organe de gestion de sa demande de réveil de réseau, il effectue successivement des nouvelles demandes de réveil de réseau jusqu'à ce qu'il obtienne satisfaction. L'organe de gestion n'étant pas configuré pour satisfaire l'organe défectueux, les organes du réseau multiplexé vont alors faire l'objet d'une alternance de phases de mise en veille et de réveil qui entraîne une surconsommation électrique du réseau qui peut provoquer une décharge de la batterie (dans le cas d'une implantation dans un véhicule automobile).

Le document WO01/42054 décrit un circuit pour activer, via un réseau CAN, une unité de contrôle tel qu'un contrôleur ABS d'un véhicule.

Le document DE10246337 décrit un système de supervision d'un réseau CAN. Le réseau peut entrer dans un mode de semi veille dans lequel peu de messages transitent sur le réseau.

Le document DE10358584 décrit un dispositif pour réveiller les membres d'un réseau comportant des moyens de détection comptant des intervalles de temps entre signaux et déclenchant un processus particulier de veille.

L'invention a donc pour but d'améliorer la situation.

Elle propose à cet effet un procédé, dédié au contrôle du réveil d'un organe d'un réseau de communication multiplexé géré par un organe de gestion, et consistant, chaque fois que cet organe veut effectuer auprès du réseau une demande de réveil de réseau, à déterminer la valeur en cours d'un compteur local, et si cette valeur en cours est supérieure ou égale à un seuil choisi à interdire à cet organe d'effectuer sa demande, tandis que si cette valeur en cours est inférieure au seuil choisi à autoriser cet organe à effectuer sa demande et à incrémenter d'une unité la valeur en cours du compteur.

Par ailleurs, en cas de réception par l'organe, via le réseau, d'une autorisation de réveil de réseau issue de l'organe de gestion, on peut mettre à zéro la valeur en cours du compteur de cet organe, tandis qu'en cas de réception par cet organe, via le réseau, d'une interdiction de réveil, on peut ordonner à cet organe de se remettre dans son état de veille et on peut laisser inchangée la valeur en cours du compteur de cet organe.

En outre, en cas de réception par l'organe, via le réseau, d'une demande de réveil de réseau issue de l'organe de gestion ou d'un autre organe du réseau, on peut mettre à zéro la valeur en cours du compteur de cet organe et autoriser le réveil de ce dernier si il reçoit ensuite de l'organe de gestion une autorisation de réveil (il est rappelé que cette autorisation constitue une confirmation de la demande de réveil réseau lorsque cette dernière est justifiée).

L'invention propose également un dispositif de contrôle, destiné à faire partie d'un (ou à être couplé à un) organe d'un réseau de communication multiplexé géré par un organe de gestion, et chargé, chaque fois que cet organe veut effectuer auprès du réseau une demande de réveil de réseau, de déterminer la valeur en cours d'un compteur local, et si cette valeur en cours est supérieure ou égale à un seuil choisi d'interdire à cet organe d'effectuer sa demande, tandis que si cette valeur en cours est inférieure au seuil choisi d'autoriser cet organe à effectuer sa demande et d'incrémenter d'une unité la valeur en cours du compteur.

Ce dispositif peut être également agencé, lorsque l'organe reçoit, via le réseau, une autorisation de réveil de réseau issue de l'organe de gestion, pour mettre à zéro la valeur en cours du compteur de cet organe, et lorsque cet organe reçoit, via le réseau, une interdiction de réveil, pour ordonner à cet organe de se remettre dans son état de veille et pour laisser inchangée la valeur en cours du compteur de cet organe.

Ce dispositif peut être également agencé, lorsque l'organe reçoit, via le réseau, une demande de réveil de réseau issue de l'organe de gestion ou d'un autre organe du réseau, et pour autoriser le réveil de cet organe et mettre à zéro la valeur en cours de son compteur si il reçoit ensuite de l'organe de gestion une autorisation de réveil.

L'invention propose également un organe destiné à faire partie d'un réseau multiplexé et équipé d'un dispositif de contrôle du type de celui présenté ci-avant.

L'invention est particulièrement bien adaptée, bien que non limitativement, aux réseaux multiplexés choisis parmi les réseaux d'interconnexion locale (ou LIN (pour Local Interconnect Network)) et les réseaux de type CAN (Controller Area Network).

D'autres caractéristiques et avantages de l'invention apparaîtront à l'examen de la description détaillée ci-après, et des dessins annexés, sur lesquels :
- la figure 1 illustre schématiquement un réseau multiplexé, par exemple de type LIN ou CAN, comportant trois organes équipés d'un dispositif de contrôle selon l'invention, et
- la figure 2 illustre schématiquement un exemple d'algorithme permettant de mettre en oeuvre un procédé de contrôle selon l'invention.

Les dessins annexés pourront non seulement servir à compléter l'invention, mais aussi contribuer à sa définition, le cas échéant.

L'invention a pour but d'offrir un procédé et un dispositif associé permettant de contrôler le réveil d'un organe appartenant à un réseau de communication multiplexé.

Dans ce qui suit, on considère, à titre d'exemple non limitatif, que le réseau (de communication) multiplexé est un réseau de type LIN embarqué dans un véhicule automobile, comme par exemple une voiture. Mais, l'invention n'est pas limitée à cette application. Elle concerne en effet tous les réseaux multiplexés, et notamment ceux de type CAN ou LIN, par exemple.

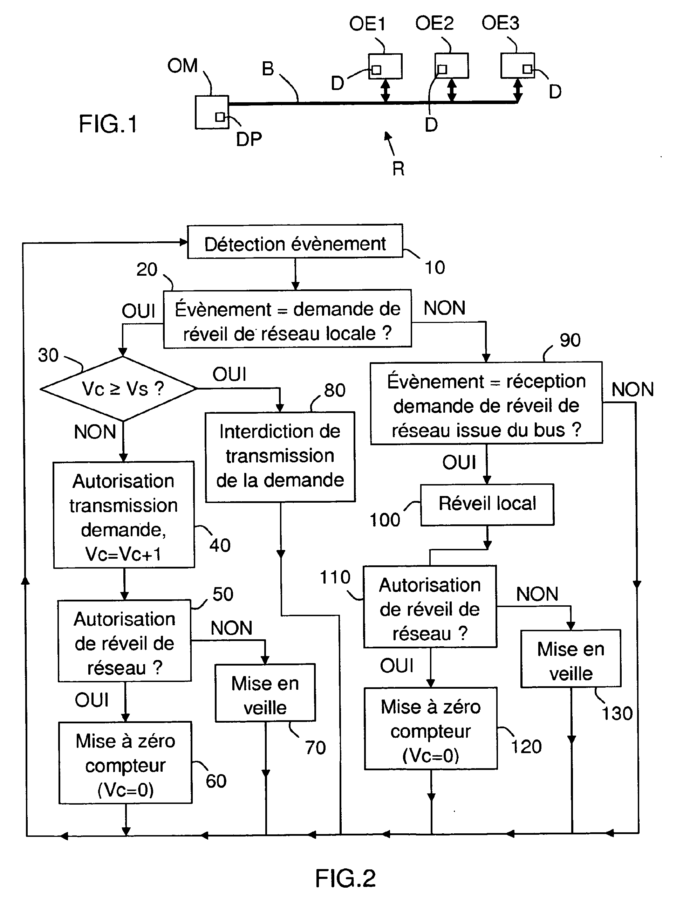

On a schématiquement représenté sur la figure 1 un exemple non limitatif de réseau (de communication) multiplexé R (ici de type LIN) comprenant un bus B auquel sont connectés un organe (ou noeud) de gestion OM, ci-après appelé organe maître, et trois organes OE1 à OE3, ci-après appelés organes esclaves OEi (i =1 à 3).

On notera que le réseau multiplexé R peut ne comporter qu'un seul organe (ou noeud) esclave OEi ou bien plus d'un organe (ou noeud) esclave OEi.

L'organe maître (ou de gestion) OM et les organes esclaves OEi peuvent être de tout type. Par exemple, dans le cas d'une voiture il peut s'agir d'éléments, d'équipements ou d'organes du système de climatisation ou du système de contrôle des translations des vitres ou encore du système de verrouillage des portes.

L'organe maître OM dispose d'un dispositif (ou automate) principal DP qui est chargé de gérer les différentes phases de vie (veilles et réveils) des organes esclaves OEi de son réseau multiplexé R. Chaque fois que ce dispositif (ou automate) principal DP détecte sur le bus B une activité (par exemple un message de demande de réveil de réseau), il engage une procédure destinée à déterminer si un organe esclave OEi est effectivement à l'origine de cette activité et si elle est justifiée. Si l'organe maître OM obtient d'un organe esclave « activateur » OEi une confirmation de réveil et qu'il considère que le réveil du réseau est justifié, alors il autorise tous les organes esclaves OEi de son réseau R à rester réveillés. Si il (OM) n'obtient pas de confirmation de demande de réveil de réseau ou bien si le réveil du réseau lui paraît injustifié, alors il (OM) ordonne aux organes esclaves OEi de son réseau R de se remettre dans leur état de veille.

Le procédé de contrôle selon l'invention est mis en oeuvre au niveau d'un (de préférence chaque) organe esclave OEi, capable d'initier une demande de réveil réseau, au moyen d'un dispositif de contrôle D. Comme illustré non limitativement, ce dispositif D peut faire partie intégrante d'un organe esclave OEi. Mais, dans une variante, il pourrait n'être que couplé à un organe esclave OEi. De ce fait, un dispositif D peut être réalisé sous la forme de modules logiciels (ou informatiques), ou de circuits électroniques, ou encore d'une combinaison de circuits électroniques et de modules logiciels. On notera que le dispositif de contrôle D peut être considéré comme un automate.

On se réfère maintenant à l'algorithme de la figure 2 pour présenter en détail le procédé selon l'invention. Ce dernier est effectué chaque fois que le dispositif de contrôle D (selon l'invention) d'un organe esclave OEi (par exemple OE1) détecte un (ou est averti de l'occurrence d'un) évènement au sein dudit organe esclave OE1 (dans une étape 10). On entend ici par « évènement » une décision d'effectuer une demande de réveil de réseau ou éventuellement la détection d'une activité sur le bus B, interprétée comme une demande de réveil de réseau issue d'un autre organe esclave OEi' (ici i'= 2 ou 3) ou de l'organe maître OM.

Par exemple, lorsque le dispositif D détecte un tel évènement dans une étape 10, il peut effectuer dans une étape 20 un test destiné à déterminer s'il s'agit d'une décision d'effectuer une demande de réveil de réseau, prise par son organe esclave OE1.

Si le test de l'étape 20 indique que l'évènement est une décision locale d'effectuer une demande de réveil de réseau, alors, le dispositif de contrôle D effectue dans une étape 30 une comparaison entre la valeur en cours Vc d'un compteur local et un seuil choisi Vs.

Ce seuil Vs est par exemple égal à 3 ou 4. Il est représentatif du nombre maximal de réveils de réseau successifs intempestifs (ou non justifiés) que l'on tolère qu'un organe esclave OEi déclenche avant de procéder à l'interdiction de la génération locale de nouvelles demandes de réveil de réseau par cet organe esclave OEi.

Si la valeur en cours Vc est inférieure au seuil choisi Vs (Vc < Vs), alors, dans une étape 40, le dispositif D autorise son organe esclave OE1 à transmettre sur le bus B sa demande de réveil de réseau, puis il incrémente d'une unité la valeur en cours Vc du compteur (Vc = Vc + 1). L'organe esclave OE1 passe donc dans un état de phase de vie réseau normal dans lequel il va recevoir de l'organe de gestion OM soit une autorisation de réveil (qui constitue une confirmation de la demande de réveil réseau lorsque l'organe de gestion OM estime que cette dernière est justifiée), soit un ordre de remise dans son état de veille (si l'organe de gestion OM estime que la demande de réveil réseau est injustifiée).

Il est rappelé que l'organe de gestion OM doit généralement vérifier si une demande de réveil est justifiée ou injustifiée auprès de l'organe esclave OEi qui est la source de cette demande. Par conséquent, des trames peuvent circuler sur le bus B avant qu'un organe esclave OEi ne reçoive de l'organe de gestion OM une autorisation de réveil ou une demande de mise en veille.

Si l'organe esclave OE1 reçoit de l'organe de gestion OM, dans une étape 50, une autorisation de réveil, alors dans une étape 60 son dispositif D l'autorise à rester réveillé et met à zéro la valeur Vc de son compteur local (Vc = 0). Le dispositif de contrôle D peut alors retourner à l'étape 10 pour détecter un prochain évènement.

En revanche, si l'organe esclave OE1 reçoit de l'organe de gestion OM, dans l'étape 50, une interdiction de réveil, alors dans une étape 70 son dispositif D lui ordonne de se remettre dans son état de veille et laisse inchangée la valeur Vc de son compteur local. Le dispositif de contrôle D peut alors retourner à l'étape 10 pour détecter un prochain évènement.

Si le test effectué à l'étape 30 indique que la valeur en cours Vc est supérieure ou égale au seuil choisi Vs (Vc ≥ Vs), alors, dans une étape 80, le dispositif de contrôle D interdit à son organe esclave OE1 de transmettre sur le bus B sa demande de réveil de réseau. Il peut également et éventuellement incrémenter d'une unité la valeur en cours Vc du compteur (Vc = Vc + 1), bien que cela ne soit pas nécessaire. A la fin de cette étape 80, le procédé selon l'invention prend fin. Le dispositif de contrôle D peut alors retourner à l'étape 10 pour détecter un prochain évènement.

Si le test de l'étape 20 indique que l'évènement n'est pas une décision locale d'effectuer une demande de réveil de réseau, alors, le dispositif de contrôle D peut par exemple effectuer dans une étape 90 un test destiné à déterminer si cet évènement est une « réception » d'une demande de réveil de réseau issue d'un autre organe esclave OEi' (ici i'= 2 ou 3) ou de l'organe maître OM.

Si le test de l'étape 90 indique que l'évènement est une réception d'une demande de réveil de réseau issue d'un autre organe esclave OEi' ou de l'organe maître OM, alors, dans une étape 100, le dispositif de contrôle D autorise le réveil de son organe esclave OE1, quelle que soit la valeur en cours Vc du compteur.

Puis, si l'organe esclave OE1 reçoit de l'organe de gestion OM, dans une étape 110, une autorisation de réveil, alors dans une étape 120 son dispositif D l'autorise à rester réveillé et met à zéro la valeur Vc de son compteur local (Vc = 0). Le dispositif de contrôle D peut retourner à l'étape 10 pour détecter un prochain évènement.

En revanche, si l'organe esclave OE1 reçoit de l'organe de gestion OM, dans l'étape 110, une interdiction de réveil, alors dans une étape 130 son dispositif D lui ordonne de se remettre dans son état de veille et laisse inchangée la valeur Vc de son compteur local.

Si le test de l'étape 90 indique que l'évènement n'est pas une réception d'une demande de réveil de réseau issue d'un autre organe esclave OEi' ou de l'organe maître OM, alors cet évènement n'est pas géré par le dispositif de contrôle D. Par conséquent, le procédé selon l'invention prend fin, et le dispositif de contrôle D peut retourner à l'étape 10 pour détecter un prochain évènement.

En résumé, chaque fois qu'un organe esclave OEi veut effectuer auprès du réseau R une demande de réveil de réseau, son dispositif D détermine la valeur en cours Vc d'un compteur local, et si cette valeur en cours Vc est supérieure ou égale à un seuil choisi Vs il interdit à son organe esclave OEi d'effectuer sa demande, tandis que si cette valeur en cours Vc est inférieure au seuil choisi Vs il autorise son organe esclave OEi à effectuer sa demande et il incrémente d'une unité la valeur en cours Vc du compteur. Puis, si l'organe esclave OEi reçoit ensuite de l'organe de gestion OM, via le réseau R, une autorisation de réveil réseau, alors son dispositif D met à zéro la valeur en cours Vc du compteur et autorise le réveil de son organe OEi.

Il est important de noter que dans l'algorithme décrit ci-avant en référence à la figure 2, il n'est pas obligatoire d'effectuer les tests des étapes 20 et 90 destinés à déterminer la nature d'évènements détectés. En effet, on peut envisager que le dispositif D ne soit agencé que pour détecter les décisions d'effectuer une demande de réveil de réseau de son organe esclave OEi, et qu'il soit averti par ce dernier (OEi) lorsqu'il reçoit du réseau R une demande de réveil de réseau issue d'un autre organe esclave OEi' (i' ≠ i) ou de l'organe maître OM. Dans cette variante de réalisation, les étapes 20 et 90 sont donc omises.

Grâce à l'invention, il est désormais possible d'empêcher rapidement un organe esclave défaillant de générer des demandes de réveil de réseau successives de façon intempestive (ou non justifiée). Cela évite de réveiller inutilement les autres organes esclaves du réseau et donc permet d'éviter que ces derniers consomment inutilement de l'énergie électrique.

L'invention ne se limite pas aux modes de réalisation de procédé de contrôle, de dispositif de contrôle et d'organe (esclave) décrits ci-avant, seulement à titre d'exemple, mais elle englobe toutes les variantes que pourra envisager l'homme de l'art dans le cadre des revendications ci-après.

## Revendications

1. Procédé de contrôle du réveil d'un organe (OEi) d'un réseau de communication multiplexé (R) géré par un organe de gestion (OM), **caractérisé en ce qu'**il consiste, chaque fois que ledit organe (OEi) veut effectuer auprès dudit réseau (R) une demande de réveil de réseau, à déterminer la valeur en cours d'un compteur local, et si cette valeur en cours est supérieure ou égale à un seuil choisi à interdire audit organe (OEi) d'effectuer ladite demande, tandis que si cette valeur en cours est inférieure audit seuil choisi à autoriser ledit organe (OEi) à effectuer ladite demande et à incrémenter d'une unité ladite valeur en cours du compteur.

2. Procédé selon la revendication 1, **caractérisé en ce qu'**en cas de réception par ledit organe (OEi), via ledit réseau (R), d'une autorisation de réveil de réseau issue dudit organe de gestion (OM), on met à zéro ladite valeur en cours du compteur de cet organe (OEi), tandis qu'en cas de réception par ledit organe (OEi), via ledit réseau (R), d'une interdiction de réveil, on ordonne audit organe (OEi) de se remettre dans son état de veille et on laisse inchangée ladite valeur en cours du compteur de cet organe (OEi).

3. Procédé selon l'une des revendications 1 et 2, **caractérisé en ce qu'**en cas de réception par ledit organe (OEi), via ledit réseau (R), d'une demande de réveil de réseau issue dudit organe de gestion (OM) ou d'un autre organe (OEi') dudit réseau (R), on autorise le réveil de cet organe (OEi) et on met à zéro la valeur en cours du compteur ce dernier (OEi) si il reçoit ensuite dudit organe de gestion (OM) une autorisation de réveil.

4. Procédé selon l'une des revendications 1 à 3, **caractérisé en ce que** le réseau multiplexé (R) est choisi parmi un réseau d'interconnexion locale (LIN) ou un réseau de type CAN.

5. Dispositif (D) de contrôle du réveil d'un organe (OEi) d'un réseau de communication multiplexé (R) géré par un organe de gestion (OM), **caractérisé en ce qu'**il est agencé, chaque fois que ledit organe (OEi) veut effectuer auprès dudit réseau (R) une demande de réveil de réseau, pour déterminer la valeur en cours d'un compteur local, et si cette valeur en cours est supérieure ou égale à un seuil choisi pour interdire audit organe (OEi) d'effectuer ladite demande, tandis que si cette valeur en cours est inférieure audit seuil choisi pour autoriser ledit organe (OEi) à effectuer ladite demande et pour incrémenter d'une unité ladite valeur en cours du compteur.

6. Dispositif selon la revendication 5, **caractérisé en ce qu'**il est agencé, lorsque ledit organe (OEi) reçoit, via ledit réseau (R), une autorisation de réveil de réseau issue dudit organe de gestion (OM), pour mettre à zéro la valeur en cours du compteur de cet organe (OEi), et lorsque ledit organe (OEi) reçoit, via ledit réseau (R), une interdiction de réveil, pour ordonner audit organe (OEi) de se remettre dans son état de veille et pour laisser inchangée ladite valeur en cours du compteur de cet organe (OEi).

7. Dispositif selon l'une des revendications 5 ou 6, **caractérisé en ce qu'**il est agencé, lorsque ledit organe (OEi) reçoit, via ledit réseau (R), une demande de réveil de réseau issue dudit organe de gestion (OM) ou d'un autre organe (OEi') dudit réseau (R), pour autoriser le réveil de cet organe (OEi) et mettre à zéro la valeur en cours du compteur de ce dernier (OEi) si il reçoit ensuite dudit organe de gestion (OM) une autorisation de réveil.

8. Dispositif selon l'une des revendications 4 à 7, **caractérisé en ce que** le réseau multiplexé (R) est choisi parmi un réseau d'interconnexion locale (LIN) ou un réseau de type CAN.

9. Organe (OEi) pour un réseau multiplexé (R) géré par un organe de gestion (OM), **caractérisé en ce qu'**il comprend un dispositif de contrôle (D) selon l'une des revendications 5 à 8.

## Claims

1. Method of controlling the wakening up of a component (OEi) of a multiplexed communication network (R) managed by a management member (OM), **characterised in that** it consists, whenever said component (OEi) wishes to make, to said network (R), a request to wake up the network, of determining the current value of a local counter and, if this current value is greater than or equal to a chosen threshold, preventing said component (OEi) from making said request, while, if this current value is less than said chosen threshold, enabling said component (OEi) to make said request and to increment said current value of the counter by one unit.

2. Method according to claim 1, **characterised in that**, in the case of reception by said component (OEi), via said network (R), of an authorisation to wake up the network issuing from said management member (OM), said current value of the counter of this component (OEi) is set to zero, while, in the case of reception by said component (OEi), via said network (R), of a prohibition on waking up, said component (OEi) is ordered to go back to its standby state and said current value of the counter of this component (OEi) is left unchanged.

3. Method according to one of claims 1 and 2, **characterised in that**, in the case of reception by said component (OEi), via said network (R), of a request to wake up the network issuing from said management member (OM) or another component (OEi') of said network (R), the waking up of this component (OEi) is enabled and the current value of the counter of the latter (OEi) is set to zero if it next receives a wake-up authorisation from said management member (OM).

4. Method according to one of claims 1 to 3, **characterised in that** the multiplexed network (R) is chosen from a local interconnection network (LIN) or a network of the CAN type.

5. Device (D) for controlling the waking up of a component (OEi) of a multiplexed communication network (R) managed by a management member (OM), **characterised in that** it is arranged, whenever said component (OEi) wishes to make to said network (R) a request to wake up the network, to determine the current value of a local counter and, if this current value is greater than or equal to a chosen threshold, to prohibit said component (OEi) from making said request, while, if this current value is less than said chosen threshold, to enable said component (OEi) to make said request and to increment said current value of the counter by one unit.

6. Device according to claim 5, **characterised in that** it is arranged, when said component (OEi) receives, via said network (R), an authorisation to wake up the network issuing from said management member (OM), to set to zero the current value of the counter of this component (OEi) and, when said component (OEi) receives, via said network (R), a prohibition on waking up, to instruct said component (OEi) to go back to its standby state and to leave unchanged said current value of the counter of this component (OEi).

7. Device according to one of claims 5 or 6, **characterised in that** it is arranged, when said component (OEi) receives, via said network (R), a request to wake up the network issuing from said management member (OM) or another component (OEi') of said network (R), to authorise the waking up of this component (OEi) and to set to zero the current value of the counter of the latter (OEi) if it next receives a wake-up authorisation from said management member (OM).

8. Device according to one of claims 4 to 7, **characterised in that** the multiplexed network (R) is chosen from a local interconnection network (LIN) or a network of the CAN type.

9. Component (OEi) for a multiplexed network (R) managed by a management member (OM), **characterised in that** it comprises a control device (D) according to one of claims 5 to 8.

## Patentansprüche

1. Verfahren zur Aufwecksteuerung eines Organs (OEi) eines Multiplex-Kommunikationsnetzes (R), das von einem Verwaltungsorgan (OM) verwaltet wird, **dadurch gekennzeichnet, dass** es darin besteht, jedes Mal, wenn das besagte Organ (OEi) beim besagten Netzwerk (R) einen Befehl zum Erwecken des Netzwerkes ausgeben möchte, den laufenden Wert eines lokalen Zählers zu bestimmen, und darin, wenn dieser laufende Wert größer oder gleich einem vorbestimmten Grenzwert ist, es dem besagten Organ (OEi) zu verbieten, den besagten Befehl auszuführen, währenddessen das besagte Organ (OEi), wenn dieser laufende Wert kleiner ist, als der vorbestimmte Grenzwert, berechtigt wird, den besagten Befehl auszuführen, und den besagten laufenden Wert des Zählers um eine Einheit zu erhöhen.

2. Verfahren nach Anspruch 1, **dadurch gekennzeichnet, dass** man im Falle eines Empfanges durch das besagte Organ (OEi) über das besagte Netzwerk (R) einer Freigabe zum Erwecken des Netzwerkes aus dem besagten Verwaltungsorgan (OM) den besagten laufenden Wert des Zählers dieses Organs (OEi) abnullt, während man dem besagten Organ (OEi) im Falle eines Empfanges eines Erweckverbotes durch das besagte Organ (OEi) über das besagte Netzwerk (R) den Befehl erteilt, sich wieder in seinen Stand-by Status zu begeben, und man den besagten laufenden Wert des Zählers dieses Organs (OEi) unverändert belässt.

3. Verfahren nach einem der Ansprüche 1 und 2, **dadurch gekennzeichnet, dass** man im Falle eines Empfanges eines Befehles zum Erwecken des Netzwerkes aus dem besagten Verwaltungsorgan (OM) oder einem anderen Organ (OEi') des besagten Netzwerkes (R) durch das besagte Organ (OEi) über das besagte Netzwerk (R) das Erwecken dieses Organs (OEi) freigibt, und man den besagten laufenden Wert des Zählers von letzterem (OEi) abnullt, wenn es danach vom besagten Verwaltungsorgan (OM) eine Freigabe zum Erwecken erhält.

4. Verfahren nach einem der Ansprüche 1 bis 3, **dadurch gekennzeichnet, dass** das Multiplex-Netzwerk (R) zwischen einem lokalen Netzwerk (LIN) oder einem Netzwerk in der Art eines CAN-Netzes ausgewählt wird.

5. Vorrichtung (D) zur Aufwecksteuerung eines Organs (OEi) eines Multiplex-Kommunikationsnetzes (R), das von einem Verwaltungsorgan (OM) verwaltet wird, **dadurch gekennzeichnet, dass** sie eingerichtet ist, um jedes Mal, wenn das besagte Organ (OEi) beim besagten Netzwerk (R) einen Befehl zum Erwecken des Netzwerkes ausgeben möchte, den laufenden Wert eines lokalen Zählers zu bestimmen, und, wenn dieser laufende Wert größer oder gleich einem vorbestimmten Grenzwert ist, es dem besagten Organ (OEi) zu verbieten, den besagten Befehl auszuführen, währenddessen das besagte Organ (OEi), wenn dieser laufende Wert kleiner ist, als der vorbestimmte Grenzwert, berechtigt wird, den besagten Befehl auszuführen, und den besagten Wert des laufenden Zählers um eine Einheit zu erhöhen.

6. Vorrichtung nach Anspruch 5, **dadurch gekennzeichnet, dass** sie, wenn das besagte Organ (OEi) über das besagte Netzwerk (R) aus dem besagten Verwaltungsorgan (OM) eine Freigabe zum Erwecken des Netzwerkes erhält, eingerichtet ist, um den laufenden Wert des Zählers dieses Organs (OEi) abzunullen, und es, wenn das besagte Organ (OEi) über das besagte Netzwerk (R) ein Verbot zum Erwecken erhält, eingerichtet ist, um dem besagten Organ (OEi) den Befehl zu erteilen, sich wieder in seinen Stand-by Status zu begeben, und den besagten laufenden Wert des Zählers dieses Organs (OEi) unverändert zu belassen.

7. Vorrichtung nach einem der Ansprüche 5 oder 6, **dadurch gekennzeichnet, dass** sie, wenn das besagte Organ (OEi) über das besagte Netzwerk (R) einen Befehl zum Erwecken des Netzwerkes aus dem besagten Verwaltungsorgan (OM) oder einem anderen Organ (OEi') des besagten Netzwerkes (R) erhält, eingerichtet ist, um das Erwecken dieses Organs (OEi) freizugeben, und den laufenden Wert des Zählers von letzterem (OEi) abzunullen, wenn es danach vom besagten Verwaltungsorgan (OM) eine Freigabe zum Erwecken erhält.

8. Vorrichtung nach einem der Ansprüche 4 bis 7, **dadurch gekennzeichnet, dass** das besagte Multiplex-Netzwerk (R) zwischen einem lokalen Netzwerk (LIN) oder einem Netzwerk in der Art eines CAN-Netzes ausgewählt wird.

9. Organ (OEi) für ein Multiplex-Netzwerk (R), das von einem Verwaltungsorgan (OM) verwaltet wird, **dadurch gekennzeichnet, dass** es eine Kontrollvorrichtung (D) nach einem der Ansprüche 5 bis 8 umfasst.
